# EUROPEAN PATENT SPECIFICATION

(11) **EP 2 530 871 B1**
(45) Date of publication and mention of the grant of the patent: **31.08.2016**
(21) Application number: 11290257.2
(22) Date of filing: 03.06.2011
(51) Int. Cl.: H04L 12/24, H04L 12/26, H04L 12/801

(54) **MANAGING A QUALITY OF AN EXECUTION OF A NETWORK PROVIDED SERVICE ON A USER DEVICE**
VERWALTUNG EINER QUALITÄT EINER AUSFÜHRUNG EINES VON EINEM NETZ BEREITGESTELLTEN DIENSTES AUF EINEM TEILNEHMERGERÄT
GESTION DE LA QUALITÉ DE L'EXÉCUTION D'UN SERVICE FOURNI PAR UN RÉSEAU SUR UN DISPOSITIF UTILISATEUR

(43) Date of publication of application: 05.12.2012
(73) Proprietor: ALCATEL LUCENT, 92100 Boulogne-Billancourt (FR)
(72) Inventor: Roessler, Horst, 70794 Filderstadt (DE); Grob-Lipski, Heidrun, 72181 Starzach (DE)
(74) Representative: Wetzel, Emmanuelle

(56) References cited:
- WO-A2-01/41376
- US-A1- 2010 169 475
- BOCHMANN G V ET AL: "Architectural design of adaptive distributed multimedia systems", MULTIMEDIA SOFTWARE DEVELOPMENT, 1996. PROCEEDINGS., INTERNATIONAL WOR KSHOP ON BERLIN, GERMANY 25-26 MARCH 1996, LOS ALAMITOS, CA, USA,IEEE COMPUT. SOC, US, 25 March 1996 (1996-03-25), pages 31-40, XP010200926, ISBN: 978-0-8186-7511-9

## Description

### Field of the invention

The invention relates to telecommunications, and in particular to methods of managing a quality of an execution of a network provided service on a user device, a network node, a user device and a program element.

### Background

A network may provide a service by a user device. For example, the network may provide a media stream (for example, television) or a gaming service by a laptop. Accordingly, it may be essential for a user of the user device to receive the service with a high quality of experience of the service (QoE).

The network may provide mechanisms for an improved quality of service (QoS) of the provision of the service by the user device in a case in which the network may detect an overload of network resources associated with the provision of the service by the user device. However, a quality of the execution of the service on the user device may be still poor, particularly in cases in which the service may comprise real time content and content critical with respect to an availability of network resources of the network.

EP 2 154 647 A1 describes a method of and a quality of experience optimizer (QOEO) configured for dynamically controlling the quality of a plurality of applications which are available to an end user via a communications network. Upon request of the end user for information about an actual status of the applications, the QOEO collects information related to the actual status of the applications and of flows associated with the applications. The information is provided to the end user, which in turn communicates a desired relative priority of at least one of the applications to the QOEO. The QOEO then changes the flow of the at least one of the applications in accordance with the desired relative priority.

US 2010/169475 A1 describes a process for managing usage on a broadband network. As part of the process, a subscriber's broadband usage is monitored to determine if the usage rises to a level indicative of an event which might be heavy usage or a security incident. In case of heavy usage, the subscriber is offered either an upgrade subscription or an incentive to concentrate usage in nonpeak time. In case of a security incident, security measures are taken to minimize unintended usage.

WO 01/41376 A2 describes a method for allocating system resources to provide a selected quality of service in data communications. If a first quality of service level for data communications session requested by a mobile user station is unavailable, the system provides a second quality of service level for the data communications session. If the first quality of service level becomes available, the system allocates resources for use by the user station and upgrades and downgrades the communication session accordingly.

In the document *"*Architectural Design of Adaptive Distributed Multi-media Systems" by von Bochmann, Gregor al. (Proc. Intern. Workshop on Multimedia Software Development 1996, p.31-40), a system and architecture for remote access to multimedia databases is described. A graphical interface is available for a user to select his preferences and provides the possibility of obtaining examples of specific quality features. User's requirements may concern system performance, a quality of information provided and financial costs.

### Summary

It may be an object of the present invention to provide an improved execution of a service on a user device.

The object defined above is solved by methods of managing a quality of an execution of a network provided service on a user device.

According to an exemplary aspect of the invention, a method of managing a quality of an execution of a network provided service on a user device according to claim 1 is provided.

According to another exemplary aspect of the invention, a method of managing a quality of an execution of a network provided service on a user device according to claim 4 is provided.

According to another exemplary aspect of the invention, a network node according to claim 10 is provided.

According to another exemplary aspect of the invention, a user device according to claim 11 is provided.

According to another exemplary aspect of the invention, a program element according to claim 12 is provided. The program element, when being executed by a processor, is configured to carry out or control an embodiment of the method of managing a quality of an execution of a network provided service on a user device as described above.

In the context of the present application, the term "quality of an execution of a service" may particularly denote a level of satisfaction experienced with the execution of the service by a user device and/or a user of the user device. In particular, the quality of the execution of the service may be defined by characteristics of the user device, for example, a download data rate or a data processing rate during the execution of the service on the user device. In particular, the quality of the execution of the service may comprise a Quality of Experience (QoE) of the service. In particular, a management of the quality may relate to an improvement and/or a degradation or deterioration of the quality.

The term "network provided service" may particularly denote a service or an application which may be provided or delivered by the network and/or via the network such that the service may be available on a user device. In particular, the service may comprise real time content(s) and/or a content (or contents) critical with respect to network resources available during the provision of the service.

According to the exemplary aspects of the invention, one or more network nodes may advertise a quality management related to the service execution to a user of the user device in that a network node may send respecting information to the user device. A user of the user device may be enabled to select the offered adapted execution of the service or to reject the offer. In a case in which the user may accept the offer provided by the user device, the user device may execute the service in accordance with the offer in that the network node may provide the service by the user device in accordance with the accepted offer.

Thus, an accuracy of the management of the quality of the execution of the service may be improved, since the user and/or the user device may comprise a "feedback" mechanism which may impact the quality of the execution of the service on the user device. In particular, the quality of the service of the network may be dynamically adapted in that the network node may send a respective offer to the user device. In particular, the user device may be capable of maintaining and coordinating a dependency between a quality of service of the network providing the service by the user device and a quality of experience of the execution of the service on the user device. Here, the term "quality of service" may particularly denote a network based mechanism for adapting network resources during a provision of a service to one or more user device. In particular, the quality of service may particularly comprise a Quality of Service (QoS). Hence, synchronization between the quality of experience of the user and a quality of service of the network may be accomplished. This may be particularly favourable for services comprising real time content and/or the content being critical with respect to an availability of network resources.

Further, the management of the quality of the service execution may be improved in that the user may simply accept an offer for an adapted service execution, and may not be forced to collect information related to the service provision, evaluate the collected information, and then accordingly determine a best way for an adaption of the service provision.

Next, further exemplary embodiments of the method of managing a quality of an execution of a network provided service on a user device will be explained. However, these embodiments also apply to the another method executed by the user device, the network node, the user device and the program element.

In particular, the offer may relate to enabling the user device and/or the user to test or try whether the adapted service execution may be associated with a managed or modified quality. In particular, the adapted service execution may be free of a charging.

The providing may comprise providing the service by the user device for a predetermined time period or for a time associated with the provision of the service by the user device. Thus, the adapted provision of the service may be limited to either a time interval or the entire time during the provision of the service by the user device. In particular, the time period may be predetermined by a network node, the user device and/or the user. In particular, the service may be provided for a (limited) time period by the user device in a case of the free-of-charge service execution. In particular, the service may be provided for a (limited) time period or for a provision time, hence for a session time during the service provision, by the user device in a case of the charged service execution. The providing of the service for a predetermined time interval may be particularly favourable in that the user of the user device may be enabled to test the adapted execution of the service on the user device. Further, the network operator offering the adapted provision may only have to invest little money in the test time period when providing the adapted service provision to the user device in a case in which the adapted service provision may be associated with higher costs compared to costs associated with a standard service provision. The providing of the service for the entire service provision time may be favourable in a case in which the user device may request the adapted provision for the determined charging. Here, data flows in the network may be defined for a longer time, thereby facilitating data flows in the network.

The providing may comprise adapting (particularly a characteristic of) a provision of the service by the user device particularly in response to the user device requesting an adapted (particularly characteristic of the) provision of the service by the user device. Thus, the execution of the service on the user device may be dynamically adapted by triggering the adapted provision of the service by the user device. In particular, the requested network characteristic to be adapted and the (later-on) adapted network characteristic may be identical to one another, whereby a targeted quality management may be accomplished. In particular, the requested network characteristic to be adapted and the adapted network characteristic may be different from one another, whereby the network adaption may be designed in a flexible way in that a network node may select a characteristic of the network to be adapted which may have a significant impact on the service provision and thus on the service execution.

In particular, the adapting of the service provision may be executed once, at particular time instances during the adapted service provision or continuously during the adapted service provision, in order to maintain the adapted provision of the service for the required time.

In particular, the adapting may comprise at least one of managing a data traffic associated with a provision of the service by the user device in the network, managing a provision of a content associated with the service in the network, and managing an admission of user devices to the network. In particular, the managing of the traffic may be executed by a network node of the internet service network operated by an internet service provider, and may comprise a management of a policy for providing a particular bandwidth and network based quality mechanisms, an application management or a service management. In particular, the managing of the data traffic may comprise a network node of a network operated by a network provider executing load balancing, traffic shaping, multipath traffic transport, re-routing of the traffic, network congestion avoidance mechanism and/or resource allocation. In particular, the managing of the admission may comprise a network node of the internet service network to execute access control of user devices. The term "access control" may particularly denote a control of user devices allowed to access the network, and/or user devices not allowed to access the network. In particular, the managing of the admission may comprise a network node of a network operated by a network provider managing an admission control of user devices. In particular, the managing of the provision of the content may comprise a network node of a content network operated by a content network provider executing content management mechanisms, for example, replicating (a copy) of the content or transferring the content of the service to a network node of the content network which may be located closer to the user device.

In particular, the charging for the adapted service provision may be assigned to a network node executing a measure for accomplishing the adapted service provision.

In particular, the method may further comprise at least one of the following (particularly instead of the provision of the information indicating the offer (related to the free-of-charge service execution) and/or the (free-of-charge) provision of the service in accordance with the indicated offer): Acquiring information associated with a current state of the quality of the execution of the service on the user device, determining, based on the acquired information, whether the quality of the execution of the service on the user device is to be managed, and initiating on the user device an execution of a quality management function configured for managing a quality of the execution of the service on the user device based on a result of the determining. In particular, the sending of the information indicating the offer related to an adapted execution of the service may be included in or may comprise the initiating of the execution of the quality management execution function on the user device.

In particular, the initiating may comprise sending the quality management function to the user device. Thus, storage and processing resources of the user device for the quality management function may only be occupied during the required management of the quality of the service execution. Further, the user device may not require additional resources for the new function, any may be manufactured in a cost-effective way.

In particular, the information may comprise at least one of information about a load factor of the network associated with a provision of the service by the user device and information about a characteristic of the user device associated with the execution of the service on the user device. In particular, the term "characteristic" of the user device may particularly denote any device related parameter measuring a level of a quality of the execution of the service on the user device. In particular, the characteristic of the user device may particularly comprise a (received) download data rate during the service execution and/or a data processing rate of the user device. Thus, the quality management on the user device may be based on information about evaluable parameters impacting or impacted by the execution of the service on the user device.

In particular, the quality management function may be assigned by a network (node) to at least one element selected of a group consisting of a content of the service, a kind of a service, and a network mechanism used for a provision of a service to a user device. The term "content of a service" may particularly denote a kind of payload data, and may comprise, for example, a soccer game. The term "kind of a service" may particular denote a kind of an application which the user device may receive, and may comprise, for example, a media stream, a conferencing service, or a gaming service. In particular, the term "network mechanism used for the provision of a service by a user device" may particularly denote a kind of communication (procedures), and may relate to network nodes, servers or a communication protocol used during the provision of the service by the user device. Thus, the management of the quality of the execution of the service on the user device may be facilitated in that the network node may be enabled for automatically and/or autonomously initiate the execution of the quality management function on the user device for particular preselected criteria.

In particular, the service may comprise a media data streaming, a conferencing service or a gaming service. In particular, a degradation of a media data stream, presence of jitter during a conferencing service, and delays during a gaming service may be reduced or may be compensated particularly by the quality management function.

In particular, the communication between a network node and the user device and/or between network nodes may be based on Generalized Multiprotocol Label Switching (GMPLS) User-Network Interface (UNI) providing QoS and resilience mechanisms in the network usable to support end-to-end (E2E) QoS and traffic management. Further, GMPLS UNI supports mechanisms as to admission control for managing a multi access in the network.

In particular, the presenting and the communication with a network node may be based on HTML 5 WebSocket technology providing single-socket, bi-directional push and/or pull mechanisms for presenting information between a web browser of a user device and a network node. In particular, HTML 5 WebSocket may represent an evolution of Ajax and HTML communications but may render polling of the quality management function and/or the user device for information related to changes within the network superfluous. Further, HTML 5 WebSocket may convey services comprising real time content and content critical to network resources, and may avoid communication and portability issues, for example, known from Ajax. Alternatively, the presenting and the communication with a network node may be based on Ajax and HTML communications.

In particular, other communication protocols and network architectures may be employed for the communication, since the methods and the devices may be independent of a network type and protocol type.

Next, further exemplary embodiments of the method of managing a quality of an execution of a network provided service on a user device will be explained. However, these embodiments also apply to the another method executed by the at least one network node, the network node, the user device, the system, the program element, and the computer-readable medium.

In particular, the offer may relate to enabling the user to test or try whether the adapted service execution may be associated with a managed or modified quality. In particular, the adapted service execution may be free of a charging, particularly per default.

The method may further comprise providing to the user information indicating an offer related to an adapted execution of the service on the user device in association with a charging of the adapted execution of the service, and executing the service on the user device in accordance with the indicated offer in response to receiving by the user a request requesting the offered adapted execution of the service on the user device in association with the charging of the adapted execution of the service. Accordingly, the user device may offer the user an adapted provision of the service by the user device for the notified charging conditions such that the network node may be enabled for financially accounting the costs arising from the adapted provision of the service by the user device. Further, the user may select whether to receive or to reject the service for the notified charging conditions. In particular, in a case in which the user may be satisfied with the quality of execution of the service caused by a previously adapted provision, the user device may request the adapted provision in accordance with the charging.

The method may further comprise requesting from a network node of the network an adapted provision of the service by the user device particularly in response to a user of the user device requesting an adaption of (particularly a characteristic of the user device and/or the network associated with) the service execution and/or prior the adapted execution of the service. Here, the characteristic requested by the user and the characteristic requested by the user device may be identical or may be different from one another, as explained above in conjunction with the user device requesting the adapted service provision and the network node adapting the service provision.

In particular, the requesting may comprise requesting the adapted provision for a predetermined time period or for a time associated with the provision of the service. Here, the requested time (interval) may correspond to the time (interval) of the adapted provision and/or a time (interval) indicated in the offer related to the adapted execution of the service on the user device.

The method may further comprise monitoring a characteristic of the user device associated with the execution of the service on the user device subsequent to the requesting of the adapted provision of the service in association with the charging, and providing to the user and/or a network node of the network information indicating a change of the adapted execution and/or provision of the service. Accordingly, the user device may comprise a measure for determining whether the adapted provision of the service by the user device may result in a desired quality of the service execution, and may comprise a measure for notifying a network node to omit a charging of the insufficiently adapted provision. Accordingly, network based changes of the service provision may be dynamically accounted for such that the user may not be forced to pay for an unsuccessful adapted service provision.

The providing of the information to the user may comprise presenting the information to the user via a (particularly interactive) graphical interface. In a case in which the graphical interface supports HTML 5 WebSocket or Ajax in combination with HTML, a respective element for presenting the information to the user may comprise a Graphical Unser Interface (GUI) element, for example a pop-up window. Thus, the user device may comprise a measure for visually notifying the user about information via the graphical interface, in order to enable to user to participate in the quality managing. In particular, the user may be enabled for selecting a particular configuration associated with the execution of the service on the user device from multiple options.

In particular, additionally or alternatively, the providing of the information may be based on presenting audible information to the user.

At least one of the providing of the information to the user, the receiving of the information indicating the offer (related to the free-of charge and/or charged service execution), the adapted executing of the service on the user device particularly in association with the charging, the requesting of the adapted provision of the service by the user device, the monitoring of the characteristic of the user device, and the providing of the information by the network node may be executed by a quality management function executed on the user device. The term "quality management function" may particularly denote an application enabling a management of the quality of the execution of the service on the user device. In particular, the quality management function may comprise a software agent which may be executed on the user device but which may not be installed on the user device. In particular, the quality management function may use hardware and/or software resources of the user device for the quality management. In particular, the management may relate to an improvement and/or a degradation or deterioration of the execution of the service. In particular, in a case of a network overload, the quality management function may comprise a network overload resolving functionality, a charging functionality related to the overload resolving, and a graphical interface functionality.

In particular, the quality management function may receive the charging information particularly prior to or together with the offer for the adapted execution of the service on the user device in association with a charging. In particular, the charging information may be received by the user device together with the quality management function.

In particular, the time period during which the adapted execution of the service may be available for the user may be predetermined by the quality management function.

In particular, the method may comprise executing a payment associated with the adapted service provision to a network node. The payment will be accomplished together with the request for the adapted service provision or at a later time.

At least the executing of the service in accordance with the indicated offer may be executed, particularly by the quality management function, on the user device in accordance with preferences of a user defined in the user device. In particular, all method steps of the above described method and/or the execution of the quality management function on the user device may be executed in accordance with the user preferences. In particular, the user preferences may be defined based on particular preselected characteristics of the user device associated with a preselected quality of a service execution. In particular, alternatively or additionally, the user preferences may be defined based on preselected (quality of service) characteristics of the network. Thus, the user may have a possibility to influence actions of the quality management function prompted by a network node on the user device.

In particular, the method may comprise at least one of the following (particularly instead of the providing to the user information indicating the offer (related to the free-of charge service execution) and/or the (free-of charge) executing the service in accordance with the indicated offer): receiving from a network node a quality management function configured for managing a quality of the execution of the service on the user device, executing the quality management function on the user device, monitoring a characteristic of the user device associated with the execution of the service on the user device, and sending to a network node of the network information about the monitored characteristic of the user device associated with the execution of the service on the user device.

Next, further exemplary embodiments of the network node will be explained. However, these embodiments also apply to the methods, the user device, the system, the program element, and the computer-readable medium.

In particular, the network node may be part of an internet service network, an access network or a content network. In particular, the network node may be configured to carry out steps of the methods as described above.

Next, further exemplary embodiments of the user device will be explained. However, these embodiments also apply to the methods, the network node, the system, the program element, and the computer-readable medium.

In particular, the user device may be configured as a personal computer, a laptop, a smart phone, a mobile phone or a personal digital assistant. In particular, the user device may be configured to carry out steps of the methods as described above.

### Brief description of the drawings

The invention will be described in more detail hereinafter with reference to examples of embodiment but to which the invention is not limited.
Fig. 1 is a schematic block diagram showing an architecture of a system for managing a quality of an execution of a network provided service on a user device.
Fig. 2 is a flow chart showing a method of managing a quality of an execution of a network provided service on a user device of Fig. 1 according to an exemplary embodiment of the invention.
Figs. 3 - 6 show screenshots of a web browser of the user device of Fig. 1 during method steps of the method of Fig. 2.
Fig. 7 is a schematic block diagram showing a partial view of the system of Fig. 1 during a method step of the method of Fig. 2.
Fig. 8 is a schematic block diagram showing a network node of a network for managing a quality of an execution of a network provided service on a user device according to an exemplary embodiment on the invention.
Fig. 9 is a schematic block diagram showing a user device for managing a quality of an execution of a network provided service on the user device according to an exemplary embodiment on the invention.

### Detailed description of embodiments

The illustration in the drawing is schematic. It is noted that in different Figures, similar or identical elements are provided with the same reference signs or with reference signs which are different from the respective reference signs only within a first digit.

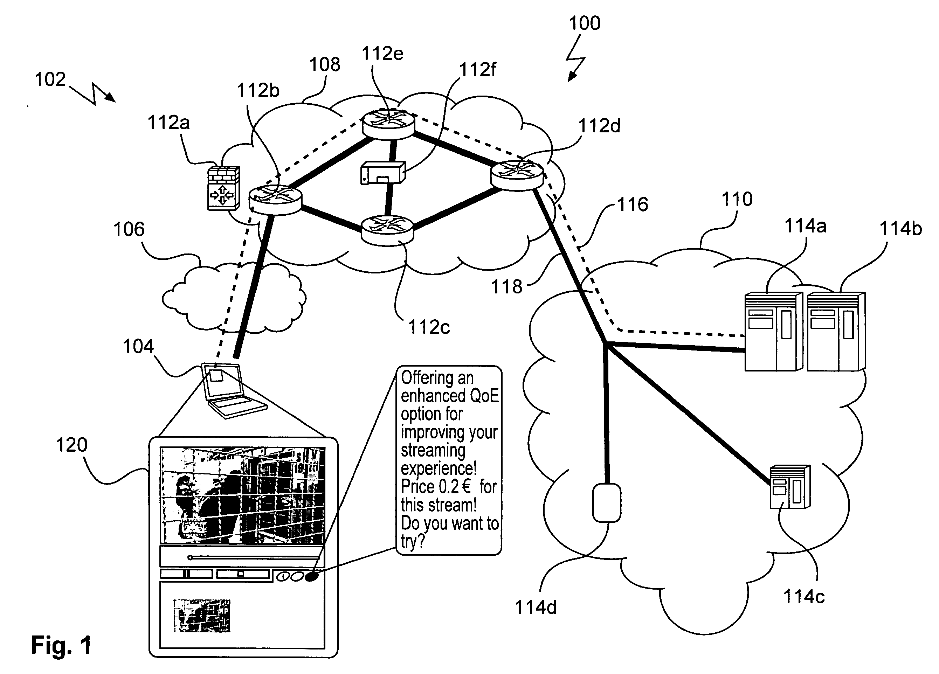

Referring to Fig. 1, a system for managing a quality of an execution of a network provided service on a user device will be explained. The system 100 comprises a network 102 and a user device 104 in the form of a laptop. The network 102 is operated by a network operator, and comprises an access network 106 operated by an access network provider, an internet service network 108 operated by an internet service provider, and a content network 110 operated by a content network provider. Communication in the system 100 is based on an Internet Protocol. The internet service network 108 comprises network nodes 112a-e configured as servers and media data and/or signalling data gateways. In the shown system architecture, the network node 112a is configured as a user access control server, the network nodes 112b, d, e are configured as media data and signalling data gateways, the network node 112c is configured as a signalling data gateway, and the network node 112f is configured as a central server configured for managing policies associated with an allocation of a bandwidth and QoS mechanisms, for managing applications and for managing services. The content network 116 comprises a content server farm comprising content servers 114a, b, a traffic charging node 114c and a traffic measurement node 114d. For example, the network 102 is operated by Telecom, the access network 106 and the internet service network 108 are operated by 02, and the content network 110 is operated by ZDF. Further, the network 102 comprises all nodes of the access network 106, the internet service network 108, and the content network 110.

A media data path 116 of media data is indicated in Fig. 1 by a dashed line, and runs between the content servers 114a, b of the content network 110 and the user device 104 via the media gateways 112b, d, e of the internet service network 108 and the access network 106. Signalling data are communicated in the system 100 along a signalling data path 118 between the content servers 114a, b, the traffic charging node 114c, the traffic measurement node 114d of the content network 110, the signalling data gateways 112b-e and the central server 112f of the internet service network 108, the access network 106 and the user device 104.

Communication in the system 100 is based on GMPLS UNI. The user device 104 employs HTML 5 WebSocket mechanisms. Accordingly, communication between the network 102 and the user device 104 is based on bi-directional information exchange, and employs push and/or pull mechanisms for information exchange information between a web browser 120 of the user device 104 and a network node in the network 102.

For explanation purposes, it is assumed that a service in the form of a media stream is provided by the network 100 by the user device 104, and is presented by the web browser 120 of the user device 104 to a user of the user device 104. The media stream comprises real time television, and a content of the media stream is a soccer game.

In the following, a method of managing a quality of an execution of a network provided service on a user device according to an exemplary embodiment of the invention will be explained with reference to Fig. 1. Here, the system 100 additionally comprises the user 230 of the user device 104.

In a first step 232 of the method, the network node 112f acquires information associated with a current state of the quality of the execution of the media stream on the user device 104. To this end, the user device 104 monitors in a step 234 QoE characteristics of the user device 104 associated with the execution of the media stream. For example, the user device 104 monitors a received download data rate of the media stream. The monitored data rate is low, since the media stream is simultaneously provided by a plurality of user devices 104. Thereupon, in a step 236, the user device 104 sends information about the monitored QoE characteristics to the network node 112f. The network node 112f also monitors in a step 238 subsequent to the reception of the information QoS characteristics of the network associated with the provision of the media stream by the user device 104. For example, the network node 112f monitors a load factor of the network 100 during the provision of the media stream. Next, in a step 240, the network node 112f determines, based on the acquired information, whether the quality of the execution of the media stream on the user device 104 is to be managed. In this embodiment, the determination is in the affirmative, and the network node 112f determines that there is an overload in the network 102 and the execution quality has to be improved. Alternatively, the determination may be not in the affirmative, and the method may stop. The network node 112f initiates in a step 242, based on a result of the determining in the step 240, on the user device 104 an execution of a quality management function configured for managing a quality of the execution of the media stream. To this end, the network node 112f sends the quality management function to the user device 104, which in turn executes the quality management function in accordance with user preferences defined in the user device 104. Here, the user 230 has previously specified that any quality management function is to be always executed if the network 102 initiates its execution.

The activated quality management function comprises a mechanism for improving the provision of the media stream by the user device (hence a network overload resolving mechanism), a mechanism related to a charging of the improved provision, and an HTML 5 WebSocket based interactive graphical interface for communicating with the user 230. A Graphical User Interface (GUI) element of the graphical interface is a pop-up window in the web browser 120 of the user device 104.

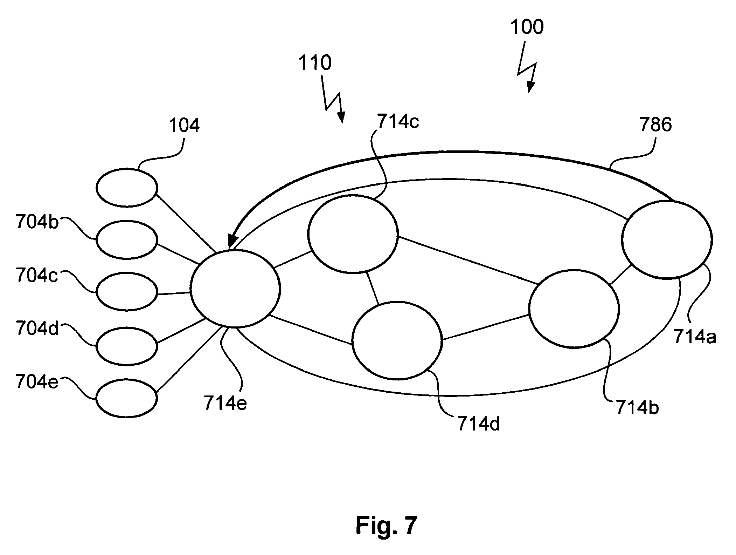

In a step 245, the network node 112f sends to the quality management function of the user device 104 information indicating an offer related to an improved execution of the service on the user device 104 for the test time period. Next, in a step 246, the quality management function on the user device 104 causes the graphical interface to be presented to the user 130. The quality management function offers to the user 230 via the pop-up window an improved execution of the media stream for a test time period (for example, five minutes). In a next step 248, the user 230 requests the improved service execution by clicking on a respective button of the pop-up window. Alternatively, the user 230 may reject the offer by not clicking on the button, and the method may stop. The pop-up window then vanishes in the web browser 120. In a step 250, the quality management function on user device 104 then requests from the network node 112f the improved provision of the media stream by the user device 104. In a step 252, the network node 112f executes network based mechanisms for improving the provision of the media stream by the user device 104. Examples of these mechanisms will be explained with reference to Fig. 7. Thus, the network node 112f provides in a step 253 the media stream by the user device 104 with an improved quality of experience for an unlimited time. Accordingly, the quality management function causes the user device 104 to execute the video stream with an improved quality. The user 230 of the user device 230 subjectively experiences an improved quality of the execution of the media stream on the user device 104 during the test time period, and the QoE characteristic of the user device 104 monitored by the user device 104 and/or the quality management function also shows an improvement. In a step 254, the network node 112f notifies the requested improved provision of the media stream by the user device 104 to the user device 104.

The network node 112f determines in a step 256 a charging for the improved provision of the media stream by the user device 104 by calculating a tariff. To this end, the network node 112f takes into account a number of user devices 104 to which the same media stream is to be simultaneously provided and an amount of available network resources. Here, the network node 112f determines that the improved provision of the media stream is available for 10 cents per minute. In a step 258, the network node 112f notifies the quality management function on the user device 104 about the determined charging conditions and the tariff. Next, in a step 259, the network node 112f sends to the quality management function on the user device 104 information indicating an offer related to the improved service execution for the determined charging conditions. In a step 260, the quality management function on the user device 104 activates a new pop-up window offering to the user 230 the improved execution of the media stream on the user device 104 for the entire time associated with the execution or provision of the media stream for the notified charging tariff. Since the user 230 was satisfied with the improved execution of the media stream during the test time period, the user 230 requests in a step 262 the improved execution of the media stream from the user device 104 for the tariff by clicking on a respective button of the pop-up window. Alternatively, the user 230 rejects the offer by clicking on a reject button, and the method may stop. The pop-up window then vanishes in the web browser 120. Thereupon, the quality management function triggers the user device 104 in a step 264 to send a respective request to the network node 112f. Next, in a step 266, the network node 112f provides the service in accordance with the offer, and notifies the user device 104 about the improved provision of the media stream by the user device 104 for the entire provision time for the tariff associated with the determined and notified charging. In turn, the user device 104 executes the media stream in accordance with the offer in the steps 259, 260.

Next, in a step 268, the quality management function on user device 104 monitors the QoE characteristics of the execution of the media stream on the user device 104. In a step 270, the quality management function detects a degradation of the monitored QoE characteristics and, in steps 272, 274, notifies the network node 112f and the user 230 about the detected degradation of the QoE characteristics. To this end, in the step 274, a new pop-up window is displayed in the browser of the user device 104. The pop-up window vanishes in the web browser 120 after an expiration of a time period determined by the quality management function. In a step 276, the network node 112f determines that the charging of the provision of the media stream is to be omitted, and, in a step 278, notifies the quality management function on the user device 104 about the omitted charging. The quality management function then notifies the user 230 about the omitted charging by a respective pop-up window in the web browser 120.

The step 234 or the step 238 may be exclusively executed. Further, the steps 234 and 238 may be executed subsequent to one another with an arbitrary sequence. Further, the quality management function may continuously monitor the QoE characteristic subsequent to being initiated on the user device 104 in the step 242, in order to provide a charging omittance mechanism for a degraded media stream provision.

Further, the network node 112f may provide the improved provision of the media stream executed in the step 256 for the test time period. Afterwards, the provision of the media stream may be reset to comprise its former poor quality. Subsequent to the step 264, the network node 112f may again execute the step 252 for improving the provision of the media stream.

Further, in order to maintain the improved provision of the media stream for the required time, the network node 112f may execute network improvement mechanisms continuously or at particular times instances.

Further, the system 100 may comprise one or more another network nodes executing one or more of the above described steps which are executed by the network node 112f. In this case, the network node 112f may or may not participate in communications and/or negotiations with the user device 104 and the one or more another network nodes.

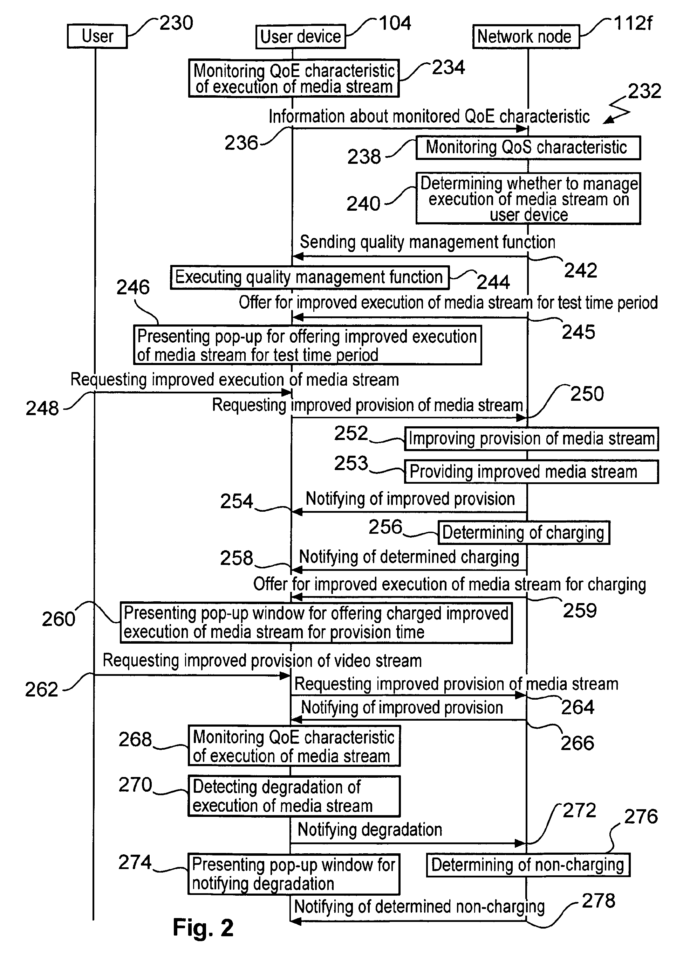

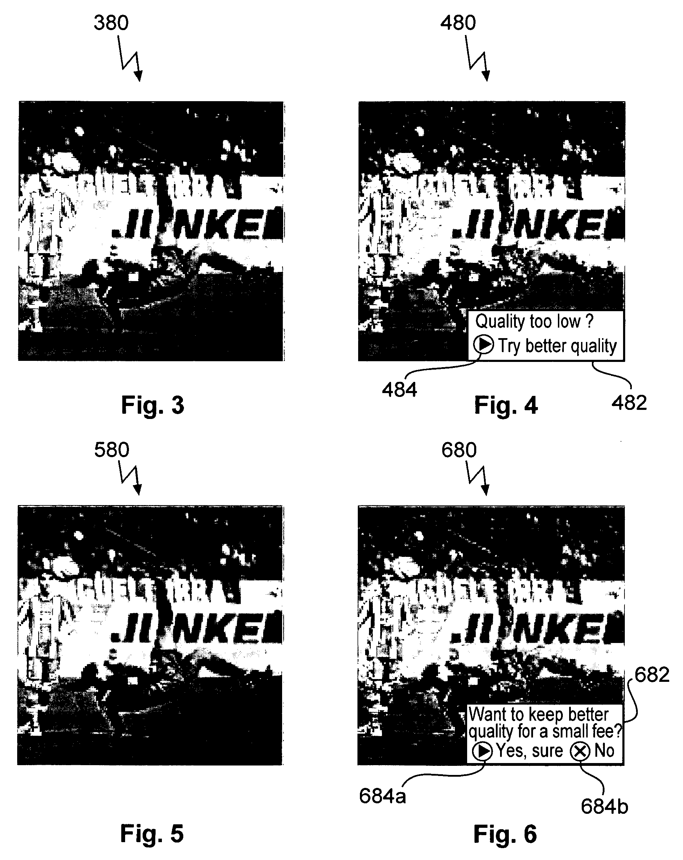

Figs. 3 to 6 show screenshots 380, 480, 580, 680 of the browser window 120 of the user device 104 at time instances during the execution of the method in Fig. 2. Prior to the step 234, the media stream is provided by the user device 104 having a high quality. To this end, sufficient network resources of the network 102 associated with the provision of the media stream by the user device 104 are available. Fig. 4 shows the screenshot 480 of the web browser 120 of the user device 104 during the step 245, 246 when a pop-up window 482 is displayed in the web browser 120 of the user device 104 offering the provision of the media stream for a test time period with an improved quality. Here, the QoE of the execution of the media stream is low. The pop-up window 482 comprises a button 484 to activate the improved provision of the media stream by the user device 104. A respective button for rejecting the improved provision may be also present in the pop-up window 484. Fig. 5 shows the screenshot 580 of the web browser 120 of the user device 104 during the steps 252-258. Here, the QoE of the execution of the media stream on the user device 104 is high. Fig. 6 shows the screenshot 680 of the web browser 120 of the user device 104 during the step 260 when a new pop-up window 682 appears in the web browser 120 offering the improved provision of the media stream for the entire provision time and the determined charging. Respective buttons 684a, b are displayed for requesting the improved provision or for rejecting the improved provision. Here, the quality of the media stream is again poor, corresponding to providing the media data in an improved way only for the test time period.

Referring to Fig. 7, a network improvement mechanism executed in the step 252 will be explained in more detail. The system 100 comprises content servers 714a-e of the content network 110 of a core network, each of which servers 714a-f comprising contents associated with services to be provided by user devices 104. The content server 714e is communicatively coupled to another user devices 704b-e. A content of the media stream is initially located on the content server 714a. Subsequent to the request in the step 250, the network node 112f sends a request to the content network 110 requesting a management of the content of the media stream for executing a QoS measure associated with improving the quality of the provision of the media stream by the user device 104. To this end, the content server 714a determines a content server 714e of the content network 110 which is closer located to the user device 104, and replicates, as indicated by an arrow 786, the content of the media stream to the nearer located content server 714e.

Additionally or alternatively, the improved provision of the media stream by the user device 104 may be accomplished by one of the following methods. The user access control server 112a of the internet service network 108 may execute subscriber access control mechanisms, in order to restrict user devices 104 to be allowed to access the system 100. Thus, more network resources per user device 104 may be available. Further, the central server 112f of the internet service network 108 may execute a bandwidth and QoS management associated with the provision of the media stream for the user devices 104. Further, an application and/or service management may be executed by the central server 112f. One or more network nodes of the network 102 may execute one of the following measures: load balancing, traffic shaping, re-routing of data, network congestion avoidance mechanisms, resource allocations and/or admission control.

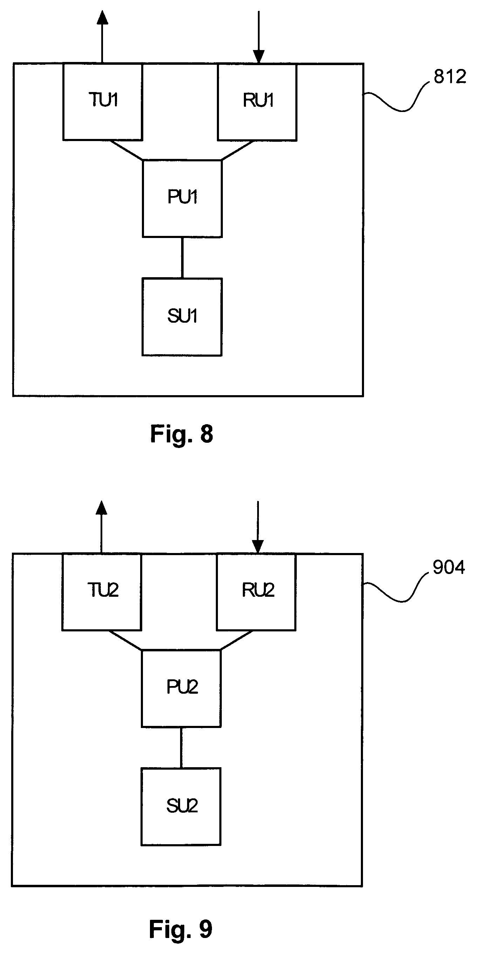

Referring to Fig. 8, a network node 812 of a network for managing a quality of an execution of a network provided service on a user device will be explained. The network node 812 comprises a sending unit TU1 configured for sending to a user device information indicating an offer related to an adapted execution of the service on the user device. The network node 812 further comprises a providing unit configured for providing the service by the user device in accordance with the indicated offer in response to receiving by the user device a request requesting the offered adapted execution of the service on the user device. The providing unit forms part of the sending unit TU1, and a processing unit PU1 configured for processing data associated with the method of managing a quality of an execution of a network provided service on a user device as described above. The network node 812 further comprises a receiving unit RU1 configured for receiving information associated with a method of managing a quality of an execution of a network provided service on a user device as described above. The network node 812 further comprises a storage unit SU1 configured for storing data associated with the method of managing a quality of an execution of a network provided service on a user device as described above. The network node 812 further comprises an adaption unit configured for adapting the provision of the service by the user device. The adaption unit forms part of the processing unit PU1, the receiving unit RU1, and the sending unit TU1, and may be configured for sending respective information to one or more another network nodes for causing one or more another network nodes to execute the adaption of the service provision.

Referring to Fig. 9, a user device 904 for managing a quality of an execution of a network provided service on the user device 904 will be explained. The user device 904 comprises a providing unit configured for providing to a user of the user device information indicating an offer related to an adapted execution of the service on the user device, and an executing unit configured for executing the service on the user device in accordance with the indicated offer in response to receiving by the user a request requesting the offered adapted execution of the service on the user device. The providing unit forms part of a processing unit PU2 configured for processing data associated with the method of managing a quality of an execution of a network provided service on the user device 904 as described above, and a sending unit TU2 configured for sending data associated with the method of managing a quality of an execution of a network provided service on the user device 904 as described above. The sending unit TU1 comprises a graphical interface for the user. The executing unit forms part of the processing unit PU2, the sending unit TU2, and a receiving unit RU2 configured for receiving from a network node a quality management function configured for managing a quality of the execution of the service on the user device 904. The user device 904 further comprises a storage unit SU2 configured for storing data associated with the method of managing a quality of an execution of a network provided service on the user device 904 as described above.

At least two units of the network node and/or the user device may be integrally formed. Further, an association between functionality based and actual physical units of the user device and/or the network node may differ from the above described embodiments.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A method of managing a quality of an execution of a network provided service on a user device (104, 904), the method being executed by at least one network node (112f, 812) of the network (102), the method comprising: sending (245) to a user device (104, 904) information indicating an offer related to an adapted execution of the service on the user device (104, 904) for a test time period providing (253) the service to the user device (104, 904) in accordance with the indicated offer in response to receiving from the user device (104, 904) a request requesting the offered adapted execution of the service on the user device (104, 904), and determining (256) the charging associated with the adapted execution of the service on the user device (104, 904), the method further comprising:
sending (259) to the user device (104, 904) information indicating an offer related to an adapted execution of the service on the user device (104, 904) in association with a charging of the adapted execution of the service, providing (266) the service to the user device (104, 904) in accordance with the indicated offer in response to receiving from the user device (104, 904) a request requesting the offered adapted execution of the service on the user device (104, 904) in association with the charging of the adapted execution of the service.

2. The method according to claim 1, wherein the providing (253, 266) comprises providing (253, 266) the service to the user device (104, 904) for a predetermined time period.

3. The method according to claims 1 or 2, wherein the providing (253, 266) comprises adapting (252) a provision of the service to the user device (104, 904).

4. A method of managing a quality of an execution of a network provided service on a user device (104, 904), the method being executed by the user device (104, 904), the method comprising: providing (246) to a user (230) of the user device (104, 904) information indicating an offer related to an adapted execution of the service on the user device (104, 904) for a test time period, execution (253) the service on the user device (104, 904) in accordance with the indicated offer in response to receiving from the user (230) a request requesting the offered adapted execution of the service on the user device (104, 904), and receiving (258) from a network node (112f, 812) of the network information about a determined charging associated with the adapted execution of the service on the user device (104, 904), the method further comprising:
providing (260) to the user (230) of the user device (104, 904) information indicating an offer related to an adapted execution of the service on the user device (104, 904) in association with a charging of the adapted execution of the service, executing (266) the service on the user device (104, 904) in accordance with the indicated offer in response to receiving from the user (230) a request (262) requesting the offered adapted execution of the service on the user device (104, 904) in association with the charging of the adapted execution of the service.

5. The method according to claim 4, the method further comprising: requesting (250, 264) from a network node (112f, 812) of the network (102) an adapted provision of the service by the user device (104, 904).

6. The method according to claims 4 or 5, the method further comprising: monitoring (268) a characteristic of the user device (104, 904) associated with the execution of the service on the user device (104, 904) subsequent to the requesting (264) of the adapted provision of the service in association with the charging, and providing (272, 274) to the user (230) and/or a network node (112f, 812) of the network (102) information indicating a change of the adapted provision of the service.

7. The method according to any one of claims 4 to 6, wherein the providing (246, 260) of the information to the user comprises presenting (246, 260, 274) the information to the user (230) via a graphical interface.

8. The method according to any one of claims 4 to 7, wherein at least one of the providing (246, 260) of the information to the user (230), the receiving (245, 259) of the information indicating the offer, the requesting (250, 264) of the adapted provision of the service by the user device (104, 904), and the monitoring (268) of the characteristic of the user device (104, 904) is executed by a quality management function executed on the user device (104, 904).

9. The method according to any one of claims 4 to 8, wherein at least the executing of the service in accordance with the indicated offer is executed in accordance with preferences of the user defined in the user device.

10. A network node (112f, 812) of a network (102) for managing a quality of an execution of a network provided service on a user device (104, 904) by executing the method according to claim 1, the network node (112f, 812) comprising: a sending unit (TUl) configured for sending to a user device (104, 904) information indicating an offer related to an adapted execution of the service on the user device (104, 904), and a providing unit configured for providing the service to the user device (104, 904) in accordance with the indicated offer in response to receiving by the user device (104, 904) a request requesting the offered adapted execution of the service on the user device (104, 904).

11. A user device (104, 904) for managing a quality of an execution of a network provided service on the user device (104, 904) by executing the method according to claim 4, the user device (1 04, 904) comprising: a providing unit configured for providing to a user (230) of the user device (104, 904) information indicating an offer related to an adapted execution of the service on the user device (104, 904), and an executing unit configured for executing the service on the user device (104, 904) in accordance with the indicated offer in response to receiving by the user (230) a request requesting the offered adapted execution of the service on the user device (104, 904).

12. A program element, which program element, when being executed by a processor, is configured to carry out or control a method of managing a quality of an execution of a network provided service on a user device (104, 904) according to any one of claims 1 to 3 or 4 to 9.

## Patentansprüche

1. Verfahren zur Verwaltung der Qualität einer Ausführung eines auf einem Benutzerendgerät (104, 904) bereitgestellten Netzwerkdienstes, wobei das Verfahren von mindestens einem Netzwerkknoten (112f, 812) des Netzwerks (102) ausgeführt wird, wobei das Verfahren umfasst:
Senden (245) an ein Benutzerendgerät (104, 904) von Information, die ein Angebot angibt in Bezug auf eine angepasste Ausführung des Dienstes auf dem Benutzerendgerät (104, 904) für einen Testzeitraum,
Bereitstellen (253) des Dienstes für das Benutzerendgerät (104, 904) in Einklang mit dem angegebenen Angebot als Antwort auf das Empfangen vom Benutzerendgerät (104, 904) einer Anforderung der angebotenen angepassten Ausführung des Dienstes auf dem Benutzerendgerät (104, 904), und
Bestimmen (256) der mit der angepassten Ausführung des Dienstes auf dem Benutzerendgerät (104, 904) verbundenen Gebühr,
wobei das Verfahren weiterhin umfasst:
Senden (259) an das Benutzerendgerät (104, 904) von Information, die ein Angebot in Bezug auf eine angepasste Ausführung des Dienstes auf dem Benutzerendgerät (104, 904) in Verbindung mit einer Gebühr für die angepasste Ausführung des Dienstes angibt,
Bereitstellen (266) des Dienstes für das Benutzerendgerät (104, 904) in Einklang mit dem angegebenen Angebot als Antwort auf das Empfangen vom Benutzerendgerät (104, 904) einer Anforderung der angebotenen angepassten Ausführung des Dienstes auf dem Benutzerendgerät (104, 904) in Verbindung mit der Gebühr der angepassten Ausführung des Dienstes.

2. Verfahren nach Anspruch 1, wobei das Bereitstellen (253, 266) das Bereitstellen 253, 266) des Dienstes für das Benutzerendgerät (104, 904) für einen vorgegebenen Zeitraum umfasst.

3. Verfahren nach Anspruch 1 oder 2, wobei das Bereitstellen (253, 266) das Anpassen (252) einer Bereitstellung des Dienstes für das Benutzerendgerät (104, 904) umfasst.

4. Verfahren zum Verwalten der Qualität einer Ausführung eines auf einem Benutzerendgerät (104, 904) bereitgestellten Netzwerkdienstes, wobei das Verfahren vom Benutzerendgerät (104, 904) ausgeführt wird, wobei das Verfahren vom Benutzerendgerät (104, 904) ausgeführt wird, wobei das Verfahren umfasst:
Bereitstellen (246) für einen Benutzer (230) des Benutzerendgeräts (104, 904) von Information, die ein Angebot angibt in Bezug auf eine angepasste Ausführung des Dienstes auf dem Benutzerendgerät (104, 904) für einen Testzeitraum,
Ausführen (253) des Dienstes auf dem Benutzerendgerät (104, 904) in Einklang mit dem angegebenen Angebot als Antwort auf das Empfangen vom Benutzer (230) einer Anforderung der angebotenen angepassten Ausführung des Dienstes auf dem Benutzerendgerät (104, 904), und
Empfangen (258) von einem Netzwerkknoten (112f, 812) des Netzwerks von Information über eine bestimmte Gebühr, die mit der angepassten Ausführung des Dienstes auf dem Benutzerendgerät (104, 904) verbunden ist, wobei das Verfahren weiterhin umfasst:
Bereitstellen (260) für den Benutzer (230) des Benutzerendgeräts (104, 904) von Information, die ein Angebot in Bezug auf eine angepasste Ausführung des Dienstes auf dem Benutzerendgerät (104, 904) in Verbindung mit einer Gebühr für die angepasste Ausführung des Dienstes angibt,
Ausführen (266) des Dienstes auf dem Benutzerendgerät (104, 904) in Einklang mit dem angegebenen Angebot als Antwort auf das Empfangen vom Benutzer (230) einer Anforderung (262) der angebotenen angepassten Ausführung des Dienstes auf dem Benutzerendgerät (104, 904) in Verbindung mit der Gebühr der angepassten Ausführung des Dienstes.

5. Verfahren nach Anspruch 4, wobei das Verfahren weiterhin umfasst:
Anfordern (250, 264) von einem Netzwerkknoten (112f, 812) des Netzwerks (102) einer angepassten Bereitstellung des Dienstes vom Benutzerendgerät (104, 904).

6. Verfahren nach Anspruch 4 oder 5, wobei das Verfahren weiterhin umfasst:
Überwachen (268) einer Eigenschaft des Benutzerendgeräts (104, 904) in Verbindung mit der Ausführung des Dienstes auf dem Benutzerendgerät (104, 904) nach dem Anfordern (264) der angepassten Bereitstellung des Dienstes in Verbindung mit der Gebühr, und
Bereitstellen (272, 274) für den Benutzer (230) und/oder einen Netzwerkknoten (112f, 812) des Netzwerks (102) von Information, die eine Änderung der angepassten Bereitstellung des Dienstes angibt.

7. Verfahren nach irgendeinem der Ansprüche 4 bis 6, wobei das Bereitstellen (246, 260) der Information für den Benutzer das Darstellen (246, 260, 274) der Information für den Benutzer (230) mittels einer grafischen Benutzeroberfläche umfasst.

8. Verfahren nach irgendeinem der Ansprüche 4 bis 7, wobei mindestens eins von Bereitstellen (246, 260) der Information für den Benutzer (230), Empfangen (245, 259) der das Angebot angebenden Information, Anfordern (250, 264) der angepassten Bereitstellung des Dienstes vom Benutzerendgerät (104, 904) und Überwachen (268) der Eigenschaft des Benutzerendgeräts (104, 904) von einer Qualitätsverwaltungsfunktion durchgeführt wird, die auf dem Benutzerendgerät (104, 904) ausgeführt wird.

9. Verfahren nach irgendeinem der Ansprüche 4 bis 8, wobei mindestens die Ausführung des Dienstes in Einklang mit dem angegebenen Angebot in Einklang mit den Präferenzen des Benutzers durchgeführt wird, die im Benutzerendgerät definiert sind.

10. Ein Netzwerkknoten (112f, 812) eines Netzwerks (102) zum Verwalten der Qualität einer Ausführung eines Netzwerkdienstes auf einem Benutzerendgerät (104, 904) durch Ausführen des Verfahrens nach Anspruch 1, wobei der Netzwerkknoten (112f, 812) umfasst:
eine Sendeeinheit (TU1), die konfiguriert ist zum Senden an ein Benutzerendgerät (104, 904) von Information, die ein Angebot in Bezug auf eine angepasste Ausführung des Dienstes auf dem Benutzerendgerät (104, 904) angibt, und
eine Bereitstellungseinheit, die konfiguriert ist zum Bereitstellen des Dienstes auf dem Benutzerendgerät (104, 904) in Einklang mit dem angegebenen Angebot als Antwort auf das Empfangen vom Benutzerendgerät (104, 904) einer Anforderung der angebotenen angepassten Ausführung des Dienstes auf dem Benutzerendgerät (104, 904).

11. Ein Benutzerendgerät (104, 904) zum Verwalten der Qualität einer Ausführung eines Netzwerkdienstes auf dem Benutzerendgerät (104, 904) durch Ausführen des Verfahrens nach Anspruch 4, wobei das Benutzerendgerät (104, 904) umfasst:
eine Bereitstellungseinheit, die konfiguriert ist zum Bereitstellen für einen Benutzer (230) des Benutzerendgeräts (104, 904) von Information, die ein Angebot in Bezug auf eine angepasste Ausführung des Dienstes auf dem Benutzerendgerät (104, 904) angibt, und
eine Ausführungseinheit, die konfiguriert ist zum Ausführen des Dienstes auf dem Benutzerendgerät (104, 904) in Einklang mit dem angegebenen Angebot als Antwort auf das Empfangen vom Benutzer (230) einer Anforderung der angebotenen angepassten Ausführung des Dienstes auf dem Benutzerendgerät (104, 904).

12. Ein Programmelement, das bei Ausführen auf einem Prozessor konfiguriert ist zum Durchführen oder Kontrollieren eines Verfahrens zum Verwalten der Qualität einer Ausführung eines Netzwerkdienstes auf einem Benutzerendgerät (104, 904) in Einklang mit irgendeinem der Ansprüche 1 bis 3 oder 4 bis 9.

## Revendications

1. Procédé de gestion de la qualité d'exécution d'un service fourni par le réseau sur un dispositif utilisateur (104, 904), le procédé étant exécuté par au moins un noeud réseau (112f, 812) du réseau (102), le procédé comprenant :
l'envoi (245) à un dispositif utilisateur (104, 904) d'informations indiquant une offre relative à une exécution adaptée du service sur le dispositif utilisateur (104, 904) pour une période d'essai,
la fourniture (253) du service au dispositif utilisateur (104, 904) conformément à l'offre indiquée en réponse à la réception en provenance du dispositif utilisateur (104, 904) d'une requête demandant l'exécution adaptée du service proposée sur le dispositif utilisateur (104, 904), et
la détermination (256) de la facturation associée à l'exécution adaptée du service sur le dispositif utilisateur (104, 904),
le procédé comprenant en outre les étapes suivantes :
l'envoi (259) au dispositif utilisateur (104, 904) d'informations indiquant une offre relative à une exécution adaptée du service sur le dispositif utilisateur (104, 904) en association avec une facturation de l'exécution adaptée du service,
la fourniture (266) du service au dispositif utilisateur (104, 904) conformément à l'offre indiquée en réponse à la réception en provenance du dispositif utilisateur (104, 904) d'une requête demandant l'exécution adaptée du service proposée sur le dispositif utilisateur (104, 904) en association avec la facturation de l'exécution adaptée du service.

2. Procédé selon la revendication 1, dans lequel la fourniture (253, 266) comprend la fourniture (253, 266) du service au dispositif utilisateur (104, 904) pour une période prédéterminée.

3. Procédé selon les revendications 1 ou 2, dans lequel la fourniture (253, 266) comprend l'adaptation (252) de la fourniture du service au dispositif utilisateur (104, 904).

4. Procédé de gestion de la qualité d'exécution d'un service fourni par le réseau sur un dispositif utilisateur (104, 904), le procédé étant exécuté par le dispositif utilisateur (104, 904) et comprenant :
la fourniture (246) à un utilisateur (230) du dispositif utilisateur (104, 904) d'informations indiquant une offre relative à une exécution adaptée du service sur le dispositif utilisateur (104, 904) pour une période d'essai,
l'exécution (253) du service sur le dispositif utilisateur (104, 904) conformément à l'offre indiquée en réponse à la réception en provenance de l'utilisateur (230) d'une requête demandant l'exécution adaptée du service proposée sur le dispositif utilisateur (104, 904), et
la réception (258) en provenance d'un noeud réseau (112f, 812) des informations réseau concernant une facturation déterminée associée à l'exécution adaptée du service sur le dispositif utilisateur (104, 904),
le procédé comprenant en outre :
la fourniture (260) à l'utilisateur (230) du dispositif utilisateur (104, 904) d'informations indiquant une offre relative à une exécution adaptée du service sur le dispositif utilisateur (104, 904) en association avec une facturation de l'exécution adaptée du service,
l'exécution (266) du service sur le dispositif utilisateur (104, 904) conformément à l'offre indiquée en réponse à la réception en provenance de l'utilisateur (230) d'une requête (262) demandant l'exécution adaptée du service proposée sur le dispositif utilisateur (104, 904) en association avec la facturation de l'exécution adaptée du service.

5. Procédé selon la revendication 4, comprenant en outre :
la demande (250, 264) à partir d'un noeud réseau (112f, 812) du réseau (102) d'une fourniture adaptée du service par le dispositif utilisateur (104, 904).

6. Procédé selon les revendications 4 ou 5, comprenant en outre :
la surveillance (268) d'une caractéristique du dispositif utilisateur (104, 904) associée à l'exécution du service sur le dispositif utilisateur (104, 904) à la suite de la demande (264) de la fourniture adaptée du service en association avec la facturation, et
la fourniture (272, 274) à l'utilisateur (230) et/ou un noeud réseau (112f, 812) du réseau (102) d'informations indiquant une modification de la fourniture adaptée du service.

7. Procédé selon l'une quelconque des revendications 4 à 6, dans lequel la fourniture (246, 260) des informations à l'utilisateur comprend la présentation (246, 260, 274) des informations à l'utilisateur (230) via une interface graphique.

8. Procédé selon l'une quelconque des revendications 4 à 7, dans lequel au moins l'une des opérations suivantes : la fourniture (246, 260) des informations à l'utilisateur (230), la réception (245, 259) des informations indiquant l'offre, la demande (250, 264) de la fourniture adaptée du service par le dispositif utilisateur (104, 904), et la surveillance (268) de la caractéristique du dispositif utilisateur (104, 904), est réalisée par une fonction de gestion de la qualité exécutée sur le dispositif utilisateur (104, 904).

9. Procédé selon l'une quelconque des revendications 4 à 8, dans lequel au moins l'exécution du service conformément à l'offre indiquée est réalisée conformément aux préférences de l'utilisateur définies dans le dispositif utilisateur.

10. Noeud réseau (112f, 812) d'un réseau (102) destiné à gérer la qualité d'exécution d'un service fourni par le réseau sur un dispositif utilisateur (104, 904) en exécutant le procédé selon la revendication 1, le noeud réseau (112f, 812) comprenant :
une unité d'envoi (TU1) configurée pour envoyer à un dispositif utilisateur (104, 904) des informations indiquant une offre relative à une exécution adaptée du service sur le dispositif utilisateur (104, 904), et
une unité de fourniture configurée pour fournir le service au dispositif utilisateur (104, 904) conformément à l'offre indiquée en réponse à la réception par le dispositif utilisateur (104, 904) d'une requête demandant l'exécution adaptée du service proposée sur le dispositif utilisateur (104, 904).

11. Dispositif utilisateur (104, 904) destiné à gérer la qualité d'exécution d'un service fourni par le réseau sur le dispositif utilisateur (104, 904) en exécutant le procédé selon la revendication 4, le dispositif utilisateur (104, 904) comprenant :
une unité de fourniture configurée pour fournir à un utilisateur (230) du dispositif utilisateur (104, 904) des informations indiquant une offre relative à une exécution adaptée du service sur le dispositif utilisateur (104, 904), et
une unité d'exécution configurée pour exécuter le service sur le dispositif utilisateur (104, 904) conformément à l'offre indiquée en réponse à la réception par l'utilisateur (230) d'une requête demandant l'exécution adaptée du service proposée sur le dispositif utilisateur (104, 904).

12. Élément de programme, lequel, lorsqu'il est exécuté par un processeur, est configuré pour réaliser ou commander un procédé de gestion de la qualité d'exécution d'un service fourni par le réseau sur un dispositif utilisateur (104, 904) selon l'une quelconque des revendications 1 à 3 ou 4 à 9.
